# EUROPEAN PATENT SPECIFICATION

(11) **EP 2 317 417 B1**
(45) Date of publication and mention of the grant of the patent: **03.07.2013**
(21) Application number: 09174820.2
(22) Date of filing: 02.11.2009
(51) Int. Cl.: G06F 3/023, G06F 17/21

(54) **System and method for facilitating character capitalization in handheld electronic device**
System und Verfahren zur Erleichterung der Zeichengroßschreibung bei tragbaren elektronischen Vorrichtungen
Système et procédé pour faciliter la capitalisation de caractères dans un dispositif électronique portatif

(43) Date of publication of application: 04.05.2011
(73) Proprietor: Research In Motion Limited, Waterloo, ON N2L 3W8 (CA)
(72) Inventor: Arastafar, Martin, Waterloo Ontario N2L 3L3 (CA)
(74) Representative: MERH-IP Matias Erny Reichl Hoffmann

(56) References cited:
- EP-A1- 2 019 355
- US-A1- 2009 148 073

## Description

### Field

The present disclosure relates generally to handheld electronic devices employing a text disambiguation function, and more particularly, to a method that is executable on a handheld electronic device that facilitates capitalization of user inputs.

### Background

Due to their small form factor and mobile functionality, handheld electronic devices are increasingly becoming popular. Examples of such handheld electronic devices include, for instance, cellular phones, smart phones, personal data assistants (PDAs), handheld computers, two-way pagers, and the like. Many handheld electronic devices also feature wireless communication capability, although many such handheld electronic devices are stand-alone devices that are functional without communication with other devices.

Improvements in handheld electronic devices are desirable.

Document EP 2 019 355 A1 discloses a method and a handheld electronic device, wherein a user enters an ambiguous input via a keyboard. A text disambiguation function is used to generate a plurality of possible inputs which are then displayed. The user selects an input from the plurality of possible inputs by using a multi-directional navigation device.

Document US 2009/148073 A1 is concerned with correcting errors in capitalization of text that has already been entered into a text component. In this known method, a user can select a word or a passage within the text component and change the capitalization of this word or passage. Capitalization change options can be presented in a drop-down selection menu.

### BRIEF DESCRIPTION OF THE DRAWINGS

A full understanding of the present disclosure can be gained from the following Description of the Example Embodiments when read in conjunction with the accompanying drawings in which like reference numerals denote like elements:

Figure 1 is a front view of a handheld electronic device in accordance with the present disclosure;

Figure 2 is a block diagram of the handheld electronic device of Figure 1;

Figure 3 is an schematic representation of an example output screen of a handheld electronic device which includes a text disambiguation function;

Figure 4 is a schematic representation of an example output screen according to an example embodiment;

Figure 5 is a flow chart illustrating the steps for a method for facilitating character capitalization;

Figure 6 is a schematic representation of an example output screen according to another example;

Figure 7 is a flow chart illustrating the steps for another method for facilitating character capitalization;

Figure 8 is a schematic representation of an example output screen according to yet another example ; and

Figure 9 is a flow chart illustrating the steps for yet another method for facilitating character capitalization.

### DESCRIPTION OF THE EXAMPLE EMBODIMENTS

In one example embodiment, there is provided a method for facilitating input capitalization in a handheld electronic device having a text disambiguation function. The handheld electronic device includes a multi-directional navigation device, a display, and a keyboard having a plurality of keys, one or more of the keys having multiple characters associated therewith. The method comprises: receiving an ambiguous input resulting from a selection of a plurality of the keys, generating a plurality of possible inputs based on the ambiguous input using the text disambiguation function, displaying each of the possible inputs on the display, changing capitalization of at least one of the possible inputs based on a detected actuation of a capitalization key, and enabling selection of at least one of the capitalized possible inputs based on a directional input received from the multi-directional navigation device.

In another example embodiment, the present disclosure provides a handheld electronic device having a keyboard with a plurality of keys including a capitalization key, one or more of the keys having multiple characters associated therewith. The Handheld electronic device further includes a multi-directional navigation device, a display, a processor, and a memory storing one or more routines executable by the processor, the one or more routines implementing a text disambiguation function and being adapted to: receive an ambiguous input resulting from a selection of the plurality of the keys, generate a plurality of possible inputs based on the ambiguous input using the text disambiguation function, display each of the possible inputs on the display, change capitalization of at least one of the possible inputs based on a detected actuation of the capitalization key, and enable selections of at least one of the capitalized possible inputs based on a directional input received from the multi-directional navigation device.

Handheld electronic devices are generally intended to be portable, and thus are of a relatively compact configuration in which keys and other input structures often perform multiple functions under certain circumstances or may otherwise have multiple aspects or features assigned thereto. With advances in technology, handheld electronic devices are built to have progressively smaller form factors yet have progressively greater numbers of applications and features resident thereon. As a practical matter, the keys of a keyboard can only be reduced to a certain small size before the keys become relatively unusable. In order to enable text entry, however, a keyboard must be capable of entering all the alphabetic characters or letters associated with the input language, as well as digits, appropriate punctuation and symbols, and functions.

One way of providing numerous characters in a small space has been to provide a "reduced keyboard" in which multiple characters, symbols, and/or digits, and the like, are assigned to any given key. For example, a touch-tone telephone having a keypad layout pursuant the international standard ITU E.161 includes a reduced keyboard providing twelve keys, of which ten have digits thereon, and of these ten keys, eight have Roman characters assigned thereto. For instance, one of the keys includes the digit "2" as well as the characters "A", "B", and "C". Since a single actuation of such a key potentially could be intended by the user to refer to any of the characters "A", "B", and "C", and potentially could also be intended to refer to the digit "2", the input (by actuation of the key) generally is an ambiguous input and is in need of some type of disambiguation in order to be useful for text entry purposes.

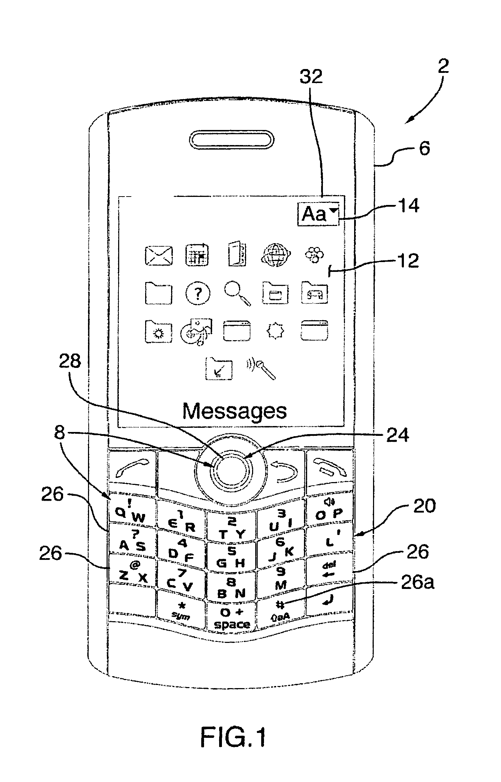

Other known reduced keyboards have included other arrangements of keys, characters, symbols, digits, functions and the like. One example of a reduced keyboard is the keyboard 20 having a plurality of keys 26 forming a part of the handheld electronic device 2 shown in Figure 1 and described in greater detail herein. Keyboard 20 is known as a reduced QWERTY keyboard.

In order to enable a user to make use of the multiple characters, digits, and the like on any given key in an ambiguous keyboard, numerous keystroke interpretation systems have been provided. For instance, a "multi-tap"" system allows a user to substantially unambiguously specify a particular character on a key by pressing the same key a number of times equivalent to the position of the desired character on the key.

Another example keystroke interpretation system would include key chording, of which various types exist. For instance, a particular character can be entered by pressing two keys in succession or by pressing and holding a first key while pressing a second key.

Still another example keystroke interpretation system would be a "press-and-hold / press-and- release" interpretation function in which a given key provides a first result if the key is pressed and immediately released, and provides a second result if the key is pressed and held for a short period of time.

Another keystroke interpretation system that has been employed is a text disambiguation function. In such a system, a user typically presses keys to which one or more characters have been associated, generally pressing each key one time for each desired character, and the disambiguation routine attempts to determine the appropriate input. Many such systems display an output component as the user is typing (pressing or actuating keys) that includes a list of possible input character strings that are generated by the disambiguation software. Numerous such systems have been proposed. One example of such a system is disclosed in commonly owned United States Patent Application No. 2006/0058995, entitled "Handheld Electronic Device With Text Disambiguation".

There is room for improvement in handheld electronic devices that employ keystroke interpretation systems or text disambiguation functions, and in particular there is a need for methods for facilitating user input in such handheld electronic devices.

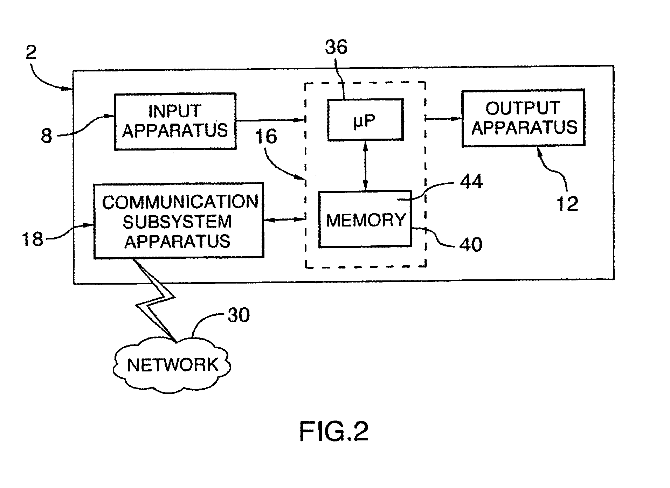

Reference is now made to Figures 1 and 2, which together show an example handheld electronic device 2 in accordance with the present disclosure. The handheld electronic device 2 comprises a housing 6, and further comprises an input apparatus 8, an output apparatus 12, and a processor apparatus 16 disposed in the housing 6. The input apparatus 8 provides input to the processor apparatus 16. The processor apparatus 16 provides output signals to the output apparatus 12.

The input apparatus 8 comprises a keyboard 20 and a multi-directional navigation device 24. The keyboard 20 in the example embodiment depicted herein comprises a plurality of keys 26 that are each actuatable to provide input to the processor apparatus 16. While the presently described example embodiment is directed to a physical keyboard 20, in alternate embodiments using a touchscreen display 32, a virtual keyboard is included. Many of the keys 26 each have a plurality of characters, i.e., linguistic elements, assigned thereto. For instance, one of the keys 26 has assigned thereto the characters "A" and "S". Another of the keys 26 has assigned thereto the characters "Q" and "W". The arrangement of characters of the example keyboard 20 is in a reduced QWERTY keyboard layout.

Some of the keys 26 are associated with functions such as "alt", "spacebar", "return", "backspace" or "delete", and "shift". These keys 26 provide functions associated with text input, such as access to alternate characters associated with a key, as well test input commands such as deletion of a character. In the currently described example embodiment, key 26a is associated with the "shift" or capitalization function, thereby allowing input of capitalized characters in the handheld electronic device 2. Upon actuation of key 26a, an icon 14 is rendered on a display 32 to provide visual indication that the capitalization function is active during the current input session.

In the presently described example embodiment, the multi-directional navigation device 24 is a trackball 28; however, alternative mechanisms for providing similar multi-directional navigation may be used in place of the trackball 28, such as, without limitation, touchpad, thumbwheel, stylus, mouse, joystick, touch-sensitive display, and hard buttons disposed on the housing 6 of the handheld electronic device 2. The trackball 28 is rotatable to provide navigational and other input to the processor apparatus 16, and additionally is translatable in a direction inwardly toward the handheld electronic device 2 to provide other inputs, such as selection inputs. The trackball 28 is freely rotatable on the housing 6 and thus is able to provide navigational inputs in the vertical direction, i.e., the up-down direction, in the horizontal direction, i.e., the left-right (side to side) direction, as well as combinations thereof. In additional, the trackball 28 may be adapted to provide navigational inputs in diagonal directions. The keys 26 and the trackball 28 serve as input members which are actuatable to provide input to the processor apparatus 16.

The processor apparatus 16 comprises a processor 36 and a memory 40. The processor 36 may be, for example and without limitation, a microprocessor (µP) that interfaces with the memory 40. The memory 40 can be any one or more of a variety of types of internal and/or external storage media such as, without limitation, RAM, ROM, EPROM(s), EEPROM(s), FLASH, and the like that provide a storage register, i.e., a machine readable medium, for data storage such as in the fashion of an internal storage area of a computer, and can be volatile memory or nonvolatile memory. The memory 40 has stored therein a number of routines 44 that are executable on the processor 36. As employed herein, the expression "a number of" and variations thereof shall refer broadly to any nonzero quantity, including a quantity of one. One or more of the routines 44 implement a text disambiguation function that is operable to disambiguate ambiguous text input, such as when one or more of the keys 26 having a plurality of characters assigned thereto is actuated, and provide to the user a number of possible intended inputs that may be selected.

The processor apparatus 16 is coupled to an output apparatus 12 which comprises a display 32. Information, such as text, characters, symbols, images, icons, graphical user interfaces (GUIs) and other items that may be displayed or rendered on the handheld electronic device 2, is displayed on the display 32 via the processor apparatus 16.

Examples of handheld electronic device 2 include mobile, or portable, wireless communication devices such as pagers, cellular phones, smart-phones, wireless organizers, PDAs, wirelessly enabled notebook computers, net-books, tablet computers, and so forth. The handheld electronic device 2 may also be a portable electronic device without wireless communication capabilities, such as a handheld electronic game device, digital photograph album, digital camera, or other device. In the presently described embodiment, the handheld electronic device 2 has wireless communication capability. Communication functions, including data and voice communications, are performed through a communication subsystem apparatus 18. Data received by the handheld electronic device 2 is decompressed and decrypted by a decoder (not shown) that optionally resides in the communication subsystem apparatus 18. The communication subsystem apparatus 18 receives messages from and sends messages to a wireless network 30. The wireless network 30 may be any type of wireless network, including, but not limited to, data wireless networks, voice wireless networks, and networks that support both voice and data communications.

A problem associated with capitalizing text is that it is cumbersome for the user to capitalize text while typing on a handheld electronic device 2, as one finger (often the right thumb) has to maintain pressing the capitalization key 26a while other finger(s) (typically the left thumb) inputs capitalized characters to compose or input text. Maintaining activation of the capitalization key 26a during the entire duration of the text input session is not only inefficient for thumb-typing as one thumb is exclusively engaged in keeping the capitalization key 26a actuated, but also awkward for cradling the handheld electronic device 2 in one hand while typing with the other or when typing with one hand.

Moreover, when the user forgets to engage the capitalization key 26a prior to input capitalization and continues composing text, or if the user intends to change the capitalization when editing inputted text, the user has to delete the inputted text in its entirety then re-input while pressing the capitalization key 26a to obtain the appropriate capitalization.

The present disclosure seeks to address these problems by providing a method for facilitating input of capitalized characters during a text disambiguation input session. According to the present disclosure, capitalization infers shifting characters from lower case to upper case, or vice-versa.

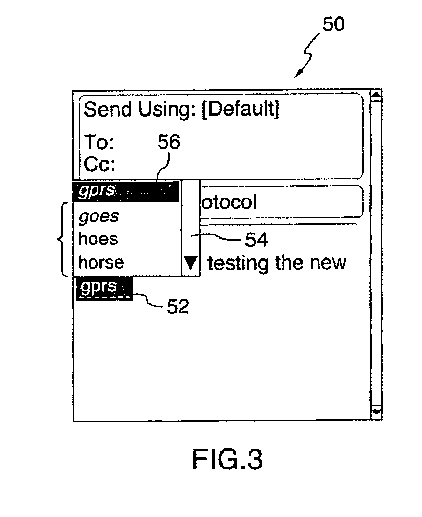

One example embodiment of such method for facilitating input of capitalized characters during a text disambiguation input session is illustrated in connection with Figure 3, which shows an example output screen 50 rendered on the display 32 of the handheld electronic device 2 of Figure 1.

As seen in Figure 3, the output screen 50 includes a text component 52 and a variant component 54. The variant component 54 represents a list of possible inputs (in the form of a number of character strings or combinations) including a default portion 56, as generated by the text disambiguation function such as the disambiguation software system described in the aforementioned commonly owned United States Patent Application Publication No. 2006/0058995. A user may select one of the items listed in the variant component 54 for inclusion in the text component 52.

As seen in the example output screen 50 of Figure 3, upon actuating keys 26 during a text input session (such as, without limitation, when the user is using the email or SMS functionality of the handheld electronic device 2), an output screen 50 is provided on the display 32. Selection by actuation or pressing of the plurality of keys 26 during a t text disambiguation input session results in an ambiguous input. In the example shown in Figure 3, the output screen 50 results from the user pressing the "GH" key 26 followed by the "OP" key 26 followed by the "ER" key 26 and subsequently the "AS" key 26. As a result, the variant component 54 lists the following possible inputs "gprs", "goes", "hoes", and "horse" that are possible inputs representing words (in the current language of the handheld electronic device 2) that may have been intended by the user (with "gprs" being the default), and "goes", "hoes", and "horse" possible intended inputs representing other character sequences (corresponding to the pressed keys) that represent words (in the current language of the handheld electronic device) that nonetheless may have been intended by the user.

In the example embodiment shown in Figure 3, the variant component 54 extends in a vertical (up and down) direction, although in alternate embodiments, the variant component 54 is scrollable in the horizontal (left and right) direction. In any given circumstance, the user may wish to select any one of the possibly inputs presented in the variant component 54 for inclusion in the text component 52. Selection of the default portion 56 as the intended input is facilitated, as shown in Figure 2, given that the default input is included in the text component 52 and is highlighted in the variant component 54. However, additional user action is required if one of the possible inputs of the variant component 54 is desired by the user, which action typically includes scrolling (or swiping action where the display 32 is a touchscreen display) through the possible inputs of the variant component 54 on the output screen.

The present disclosure seeks to facilitate input of capitalized characters during a text disambiguation input session using the capitalization key 26a to allow the user to change capitalization of the desired possible input in the variant component 54, or more easily capitalize the character being edited from the list of the displayed possible editing characters in a text editing session. Advantageously, the need to save or pre-load in memory 40 capitalized versions of words in the disambiguation software wordlist or dictionary is alleviated.

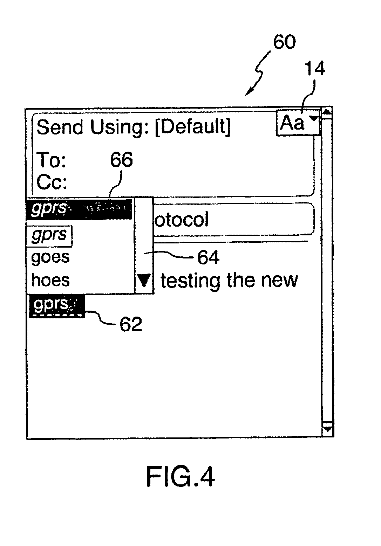

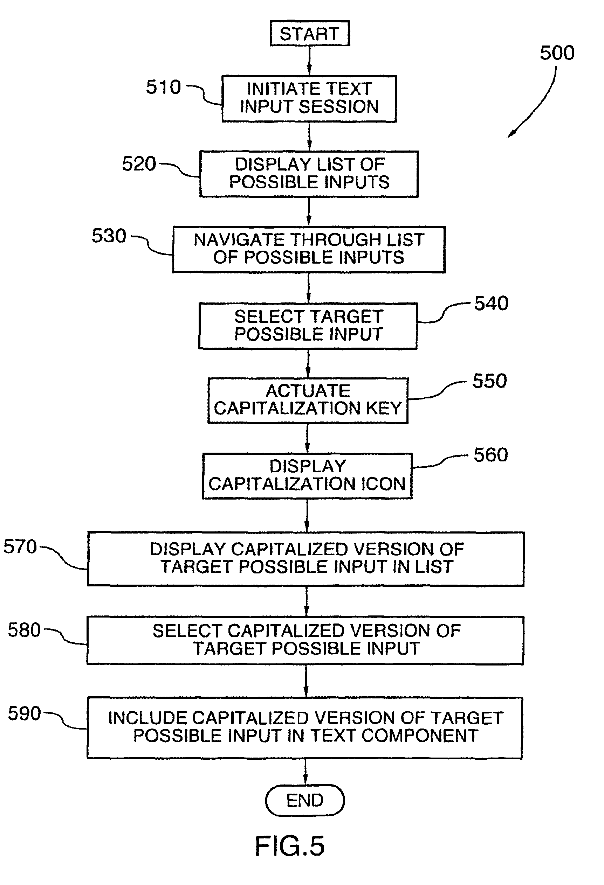

According to an aspect of the present disclosure described in example output screen 60 of Figure 4 in conjunction with the flow chart 500 in Figure 5 herein, a user is able to capitalize one of the possible inputs of the variant component 64. During a text input session wherein the user is inputting characters in the text component 62 (Step 510), a list of possible inputs corresponding to the current series of selections or actuations of keys 26 is displayed in the variant component 64 (Step 520) generated by the disambiguation function. Using trackball 28 to navigate from the default portion 66 in an up-down manner (Step 530), the user can select by highlighting a target possible input (Step 540) for capitalization, for example the "gprs" possible input of Figure 3 in the presently described example.

Upon actuation of the capitalization key 26a (Step 550), an icon 14 indicating capitalization input mode is rendered on display 32 (Step 560) and the capitalized version of the target possible input, namely "GPRS" in upper case, is now displayed in the variant component 64 as an additional possible input (Step 570) immediately underneath original "gprs" input. It is noted that actuation of the capitalization key 26a for a possible input in capitalized format (i.e. in upper case) causes the target possible input to convert capitalization (e.g. to lower case from upper case).

The user may now select the capitalized version of the target possible input (obtained at Step 570) or optionally any other possible input, by pressing the trackball 24 or other input committing key 26, such as "space" key or "enter" key (Step 580). Upon selection, the capitalized version of the target possible input is committed for inclusion in text component 62 (Step 590). User input of capitalized text is therefore simplified as less navigation and/or actuation steps are required to select a capitalized input.

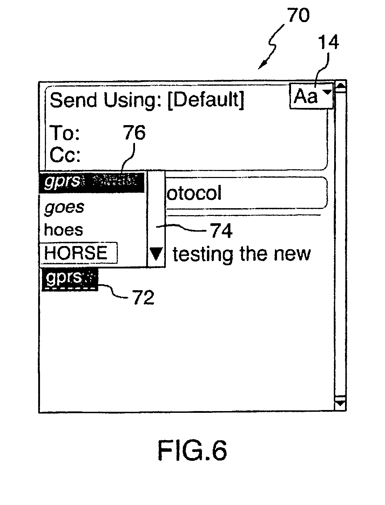

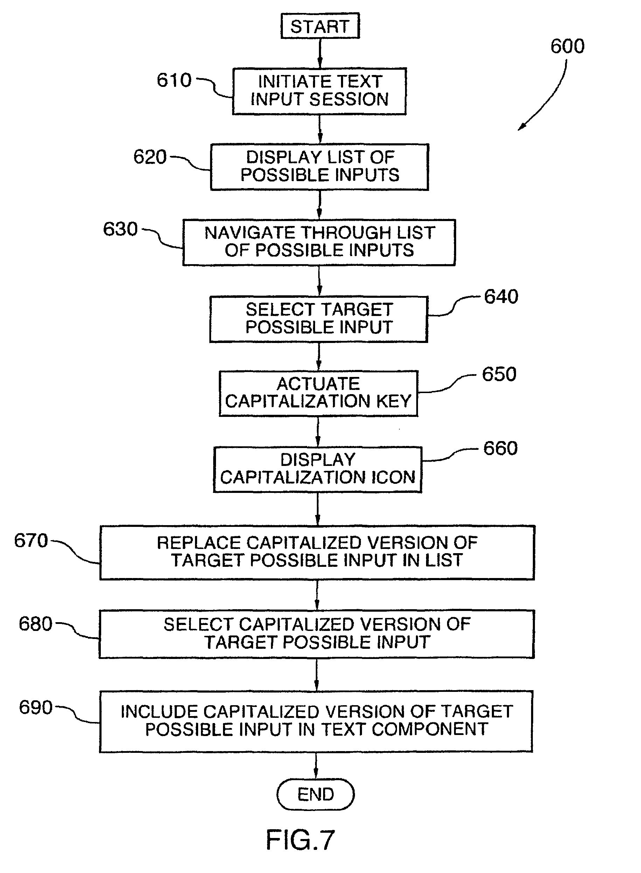

Figure 6 is an example of another output screen 70 provided on the display 32 in accordance with an alternate example and described according to the flow chart 600 of Figure 7. During a text input session for composing text in the text component 72 (Step 610), a list of possible inputs corresponding to the current series of selections or actuations of keys 26 is displayed in the variant component 74 (Step 620). Upon navigating the list of possible inputs using trackball 28 (Step 630), the user can select by highlighting a target possible input (Step 640) for capitalization, for example the "horse" input of Figure 3 in the presently described example.

By actuating the capitalization key 26a (Step 650), an icon 14 indicating capitalization input mode is shown on display 32 (Step 660) and the capitalized version of the target possible input in upper case format, namely "HORSE", replaces the target possible input "horse" in the variant component 74 (Step 670) at the location where the original target possible input was initially located as illustrated in Figure 6, while the other possible inputs are not shifted to upper case. Alternately, the capitalized version of the target possible input may be placed at the top of the list of possible inputs in the variant component 74, replacing the default portion 76. It is noted that actuation of the capitalization key 26a for a possible input that was originally in capitalized format causes the target possible input to convert capitalization (e.g. to lower case from upper case). The capitalized possible input is selected (Step 680) and included in text component 72 (Step 690).

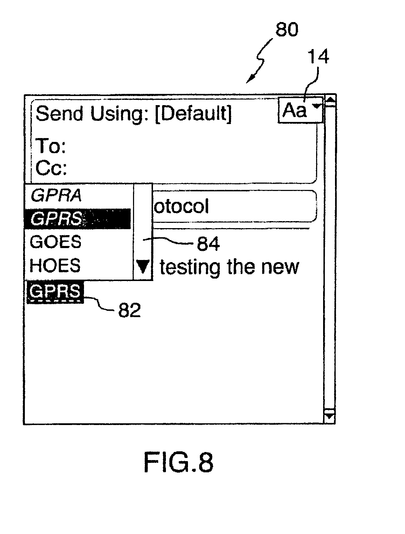

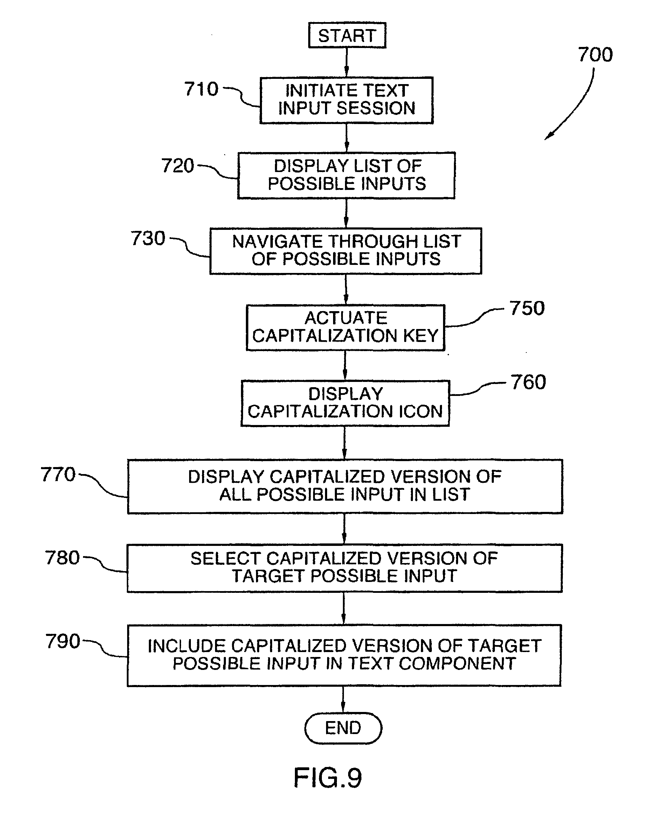

Reference is now made to Figure 8, which is yet another example of an output screen 80 is provided on the display 32. In the example shown in Figure 8 and explained in reference with the flow chart 700 of Figure 9, the output screen 80 results from the user entering text in the text component 82 during a text input session (Step 710), whereby a list of possible inputs corresponding to the current series of selections or actuations of keys 26 is presented in the variant component 84 (Step 720) generated by the disambiguation function. Upon the user pressing the capitalization key 26a (Step 750), an icon 14 indicating capitalization input mode is presented on display 32 (Step 760), and capitalized version of all possible inputs are presented in the variant component 84 possible inputs as depicted in Figure 8. The user can then select a possible input in the capitalized format (Step 780) for inclusion in the text component 82 (Step 790).

While example embodiments have been described and illustrated above, it should be understood that these example embodiments are not to be considered as limiting. Additions, deletions, substitutions, and other modifications can be made without departing from the scope of the present disclosure. Accordingly, the disclosure is not to be considered as limited by the foregoing description but is only limited by the scope of the appended claims.

## Claims

1. A method for facilitating input capitalization in a handheld electronic device (2) having a text disambiguation function, the handheld electronic device (2) having a multi-directional navigation device (24), a display (32), and a keyboard (20) having a plurality of keys (26), one or more of the keys (26) having multiple characters associated therewith, the method comprising:
receiving an ambiguous input resulting from a selection of a plurality of the keys (26);
generating a plurality of possible inputs based on the ambiguous Input using the text disambiguation function;
displaying (520; 620; 720) each of the possible inputs on the display (32);
enabling selection of a target possible input from the plurality of possible inputs based on a directional input received from the multi-directional navigation device (24);
generating an additional possible input by shifting the case of the target possible input based on a detected actuation of a capitalization key (26a);
displaying (520; 620; 720) the additional possible input on the display; and
enabling selection of the additional possible input based on a directional input received from the multi-directional navigation device (24).

2. The method according to claim 1, wherein shifting the case of the target possible input based on the detected actuation of the capitalization key (26a) includes changing capitalization of the target possible input based on the detected actuation of the capitalization key (26a).

3. The method according to claim 1 or 2, wherein shifting the case of the target possible input based on the actuation of the capitalization key (26a) includes changing the target possible input from lower case to upper case.

4. The method according to any of claims 1 to 3, wherein shifting the case of the target possible input based on the actuation of the capitalization key (26a) includes changing the target possible input from upper case to lower case.

5. The method according to any of claims 1 to 4, wherein shifting the case of the target possible input based on the actuation of the capitalization key (26a) further includes displaying a first indicator on the display (32).

6. The method according to any of claims 1 to 5, further comprising including the additional possible input in a text component (52).

7. The method according to any of claims 1 to 7, further comprising displaying a capitalization icon (14) on the display (32) upon actuation of the capitalization key (26a).

8. A handheld electronic device (2), comprising:
a keyboard (20) having a plurality of keys (26) including a capitalization key (26), one or more of the keys (26) having multiple characters associated therewith;
a multi-directional navigation device (24);
a display (32);
a processor (36); and
a memory (40) storing one or more routines executable by the processor (36), the one or more routines implementing a text disambiguation function and being adapted to:
receive an ambiguous input resulting from a selection of the plurality of the keys (26);
generate a plurality of possible inputs based on the ambiguous input using the text disambiguation function;
display (520; 620; 720) each of the possible inputs on the display (32);
enable selection of a target possible input from the plurality of possible inputs based on a directional input received from the multi-directional navigation device (24);
generate an additional possible input by shifting the case of the target possible input based on a detected actuation of the capitalization key (26a);
display (520; 620; 720) the additional possible input on the display; and
enable selection of the additional possible input based on a directional input received from the multi-directional navigation device (24).

9. The handheld electronic device (2) according to claim 8, wherein a capitalization icon (14) is displayed upon actuation of the capitalization key (26a).

10. The handheld electronic device (2) according to claim 8 or 9, wherein the multi-directional navigation device (24) is a trackball.

11. The handheld electronic device (2) according to any of claims 8 to 10, wherein the capitalization key (26a) is a "shift" key.

## Patentansprüche

1. Ein Verfahren zum Erleichtern einer Groß/Kleinschreibung einer Eingabe in einer handgehaltenen elektronischen Vorrichtung (2) mit einer Textdisambiguierungsfunktlon, wobei die handgehaltene elektronische Vorrichtung (2) eine multi-direktionale Navigationsvorrichtung (24), eine Anzeige (32) und eine Tastatur (20) mit einer Vielzahl von Tasten (26) hat, wobei eine oder mehrere der Tasten (26) mehrere Zeichen damit assoziiert hat/haben, wobei das Verfahren aufweist:
Empfangen einer mehrdeutigen Eingabe, die aus einer Auswahl einer Vielzahl der Tasten (26) resultiert;
Erzeugen einer Vielzahl von möglichen Eingaben basierend auf der mehrdeutigen Eingabe unter Verwendung der Textdisambiguierungsfunktion;
Anzeigen (520; 620; 720) jeder der möglichen Eingaben auf der Anzeige (32);
Ermöglichen einer Auswahl einer gewünschten möglichen Eingabe aus der Vielzahl von möglichen Eingaben basierend auf einer direktionalen Eingabe, die von der multi-direktionalen Navigationsvorrichtung (24) empfangen wird;
Erzeugen einer zusätzlichen möglichen Eingabe durch Ändern der Schreibung der gewünschten möglichen Eingabe basierend auf einer erfassten Betätigung einer Groß-/Kleinschreibungs-Taste (26a);
Anzeigen (520; 620; 720) der zusätzlichen möglichen Eingabe auf der Anzeige; und
Ermöglichen einer Auswahl der zusätzlichen möglichen Eingabe basierend auf einer direktionalen Eingabe, die von der multi-direktionalen Navigationsvorrichtung (24) empfangen wird.

2. Das Verfahren gemäß Anspruch 1, wobei das Ändern der Schreibung der gewünschten möglichen Eingabe basierend auf der erfassten Betätigung der Groß-/Kleinschreibungs-Taste (26a) ein Ändern der Groß-/Kleinschreibung der gewünschten möglichen Eingabe basierend auf der erfassten Betätigung der Groß-/Kleinschreibungs-Taste (26a) umfasst.

3. Das Verfahren gemäß Anspruch 1 oder 2, wobei das Ändern der Schreibung der gewünschten möglichen Eingabe basierend auf der Betätigung der Groß-/Kleinschreibungs-Taste (26a) ein Ändern der gewünschten möglichen Eingabe von Kleinbuchstaben zu Großbuchstaben umfasst.

4. Das Verfahren gemäß einem der Ansprüche 1 bis 3, wobei das Ändern der Schreibung der gewünschten möglichen Eingabe basierend auf der Betätigung der Groß-/Kleinschreibungs-Taste (26a) ein Ändern der gewünschten möglichen Eingabe von Großbuchstaben zu Kleinbuchstaben umfasst.

5. Das Verfahren gemäß einem der Ansprüche 1 bis 4, wobei das Ändern der Schreibung der gewünschten möglichen Eingabe basierend auf der Betätigung der Groß-/Kleinschreibungs-Taste (26a) weiter ein Anzeigen eines ersten Indikators auf der Anzeige (32) umfasst.

6. Das Verfahren gemäß einem der Ansprüche 1 bis 5, das weiter ein Aufnehmen der zusätzlichen möglichen Eingabe in eine Textkomponente (52) aufweist.

7. Das Verfahren gemäß einem der Ansprüche 1 bis 7, das weiter aufweist ein Anzeigen eines Groß-/Kleinschreibungssymbols (14) auf der Anzeige (32) bei Betätigung der Groß-/Kleinschreibungs-Taste (26a).

8. Eine handgehaltene elektronische Vorrichtung (2), die aufweist:
eine Tastatur (20) mit einer Vielzahl von Tasten (26), einschließlich einer Groß-/Kleinschreibungs-Taste (26), wobei eine oder mehrere der Tasten (26) mehrere Zeichen damit assoziiert hat/haben;
eine multi-direktionale Navigationsvorrichtung (24);
eine Anzeige (32);
einen Prozessor (36); und
einen Speicher (40) zum Speichern von einer oder mehreren Routine(n),
die durch den Prozessor (36) ausführbar ist/sind, wobei die eine oder mehreren Routine(n) eine Textdisambiguierungsfunktion implementiert/implementieren und ausgebildet ist/sind zum:
Empfangen einer mehrdeutigen Eingabe, die aus einer Auswahl der Vielzahl von Tasten (26) resultiert;
Erzeugen einer Vielzahl von möglichen Eingaben basierend auf der mehrdeutigen Eingabe unter Verwendung der Textdisambiguierungsfunktion;
Anzeigen (520; 620; 720) jeder der möglichen Eingaben auf der Anzeige (32);
Ermöglichen einer Auswahl einer gewünschten möglichen Eingabe aus der Vielzahl von möglichen Eingaben basierend auf einer direktionalen Eingabe, die von der multi-direktionalen Navigationsvorrichtung (24) empfangen wird;
Erzeugen einer zusätzlichen möglichen Eingabe durch Ändern der Schreibung der gewünschten möglichen Eingabe basierend auf einer erfassten Betätigung der Groß-/Kleinschreibungs-Taste (26a);
Anzeigen (520; 620; 720) der zusätzlichen möglichen Eingabe auf der Anzeige; und
Ermöglichen einer Auswahl der zusätzlichen möglichen Eingabe basierend auf einer direktionalen Eingabe, die von der multi-direktionalen Navigationsvorrichtung (24) empfangen wird.

9. Die handgehaltene elektronische Vorrichtung (2) gemäß Anspruch 8, wobei ein Groß-/Kleinschreibungssymbol (14) bei Betätigung der Groß-/Kleinschreibungs-Taste (26a) angezeigt wird.

10. Die handgehaltene elektronische Vorrichtung (2) gemäß Anspruch 8 oder 9, wobei die multi-direktionale Navigationsvorrichtung (24) ein Trackball ist.

11. Die handgehaltene elektronische Vorrichtung (2) gemäß einem der Ansprüche 8 bis 10, wobei die Groß-/Kleinschreibungs-Taste (26a) eine Shift-Taste ist.

## Revendications

1. Procédé pour faciliter une mise en majuscules d'entrée dans un dispositif électronique portable (2) possédant une fonction de désambiguïsation de texte, le dispositif électronique portable (2) comportant un dispositif de navigation multidirectionnel (24), un dispositif d'affichage (32), et un clavier (20) comportant une pluralité de touches (26), une ou plusieurs des touches (26) comportant de multiples caractères associés à celles-ci, le procédé comprenant :
la réception d'une entrée ambiguë résultant d'une sélection d'une pluralité des touches (26) ;
la génération d'une pluralité d'entrées possibles en fonction de l'entrée ambiguë à l'aide de la fonction de désambiguïsation de texte ;
l'affichage (520 ; 620 ; 720) de chacune des entrées possibles sur le dispositif d'affichage (32) ;
la validation d'une sélection d'une entrée possible cible parmi la pluralité d'entrées possibles en fonction d'une entrée directionnelle reçue à partir du dispositif de navigation multidirectionnel (24) ;
la génération d'une entrée possible additionnelle par changement de la casse de l'entrée possible cible en fonction de l'actionnement détecté d'une touche de majuscules (26a) ;
l'affichage (520 ; 602 ; 720) de l'entrée possible additionnelle sur le dispositif d'affichage ; et
la validation d'une sélection de l'entrée possible additionnelle en fonction d'une entrée directionnelle reçue à partir du dispositif de navigation multidirectionnel (24).

2. Procédé selon la revendication 1, dans lequel le changement de la casse de l'entrée possible cible en fonction de l'actionnement détecté de la touche de majuscules (26a) comprend le changement de la mise en majuscules de l'entrée possible cible en fonction de l'actionnement détecté de la touche de majuscules (26a).

3. Procédé selon la revendication 1 ou 2, dans lequel le changement de la casse de l'entrée possible cible en fonction de l'actionnement de la touche de majuscules (26a) comprend le changement de l'entrée possible cible des minuscules aux majuscules.

4. Procédé selon l'une quelconque des revendications 1 à 3, dans lequel le changement de la casse de l'entrée possible cible en fonction de l'actionnement de la touche de majuscules (26a) comprend le changement de l'entrée possible cible des majuscules aux minuscules.

5. Procédé selon l'une quelconque des revendications 1 à 4, dans lequel le changement de la casse de l'entrée possible cible en fonction de l'actionnement de la touche de majuscules (26a) comprend de plus l'affichage d'un premier indicateur sur le dispositif d'affichage (32).

6. Procédé selon l'une quelconque des revendications 1 à 5, comprenant de plus l'inclusion de l'entrée possible additionnelle dans un composant de texte (52).

7. Procédé selon l'une quelconque des revendications 1 à 6, comprenant de plus l'affichage d'une icône de mise en majuscules (14) sur le dispositif d'affichage (32) lors de l'actionnement de la touche de majuscules (26a).

8. Dispositif électronique portable (2), comprenant :
un clavier (20) comportant une pluralité de touches (26) comprenant une touche de majuscules (26), une ou plusieurs des touches (26) comportant de multiples caractères associés à celles-ci ;
un dispositif de navigation multidirectionnel (24) ;
un dispositif d'affichage (32) ;
un processeur (36) ; et
une mémoire (40) mémorisant un ou plusieurs sous-programmes pouvant être exécutés par le processeur (36), les un ou plusieurs sous-programmes réalisant une fonction de désambiguïsation de texte et étant conçus de façon à :
recevoir une entrée ambiguë résultant d'une sélection de la pluralité des touches (26) ;
générer une pluralité d'entrées possibles en fonction de l'entrée ambiguë à l'aide de la fonction de désambiguïsation de texte ;
afficher (520 ; 620 ; 720) chacune des entrées possibles sur le dispositif d'affichage (32) ;
permettre une sélection d'une entrée possible cible parmi la pluralité d'entrées possibles en fonction d'une entrée directionnelle reçue à partir du dispositif de navigation multidirectionnel (24) ;
générer une entrée possible additionnelle par changement de la casse de l'entrée possible cible en fonction d'un actionnement détecté de la touche de majuscules (26a) ;
afficher (520 ; 620 ; 720) l'entrée possible additionnelle sur le dispositif d'affichage ; et
permettre une sélection de l'entrée possible additionnelle en fonction d'une entrée directionnelle reçue à partir du dispositif de navigation multidirectionnel (24).

9. Dispositif électronique portable (2) selon la revendication 8, dans lequel une icône de mise en majuscules (14) est affichée lors de l'actionnement de la touche de majuscules (26a).

10. Dispositif électronique portable (2) selon la revendication 8 ou 9, dans lequel le dispositif de navigation multidirectionnel (24) est une boule de commande.

11. Dispositif électronique portable (2) selon l'une quelconque des revendications 8 à 10, dans lequel la touche de majuscules (26a) est une touche "Maj".
